Europäisches Patentamt

European Patent Office

Office européen des brevets

(11) Publication number: **0 133 588**
**B1**

# EUROPEAN PATENT SPECIFICATION

(45) Date of publication of patent specification: **08.11.89**

(51) Int. Cl.⁴: **F 16 F 13/00, B 60 K 5/12**

(21) Application number: **84109671.2**

(22) Date of filing: **14.08.84**

(54) **Vibration isolating device and system.**

(30) Priority: **15.08.83 JP 148946/83**
**22.11.83 JP 220109/83**

(43) Date of publication of application:
**27.02.85 Bulletin 85/09**

(45) Publication of the grant of the patent:
**08.11.89 Bulletin 89/45**

(84) Designated Contracting States:
**DE FR GB IT**

(56) References cited:
**EP-A-0 027 751      GB-A-2 041 485**
**EP-A-0 038 062      GB-A-2 041 486**
**EP-A-0 040 290      GB-A-2 041 488**
**EP-A-0 119 796      GB-A-2 132 312**
**FR-A-2 472 116**

**PATENTS ABSTRACTS OF JAPAN, vol. 8, no.
152 (M-309)1589r, July 14, 1984; & JP - A - 59
47541 (TOUKAI GOMU KOGYO K.K.) 17-03-
1984**

(73) Proprietor: **Bridgestone Corporation**
**10-1, Kyobashi 1-Chome Chuo-Ku**
**Tokyo 104 (JP)**

(72) Inventor: **Dan, Takuya**
**1082-1, Kanai-cho Totsuka-ku**
**Yokohama City KanagawaPref. (JP)**
Inventor: **Fujiwara, Nobuaki**
**1-57, Kamimura-cho Shouwa-ku**
**Nagoya City (JP)**
Inventor: **Kojima, Hiroshi**
**1082-1, Kanai-Cho Totsuka-Ku**
**Yokohama City Kanagawa Pref. (JP)**
Inventor: **Orikawa, Michihiro**
**1052, Kashio-Cho Totsuka-Ku**
**Yokohama City Kanagawa Pref. (JP)**

(74) Representative: **Lehn, Werner, Dipl.-Ing. et al
Hoffmann, Eitle & Partner Patentanwälte
Arabellastrasse 4
D-8000 München 81 (DE)**

Courier Press, Leamington Spa, England.

## Description

This invention relates to a vibration isolating device for damping vibrations from vibration source, said device comprising a vibration isolating device comprising two vibration-damping liquid chambers, and a partition member interposed between said two liquid chambers and provided with a restricted passage as defined in the preamble of claim 1.

Such a known isolating device according to EP—A—40 290 comprises a partition member provided with a restricted passage, which divides a vibration isolating body into two liquid chambers and gives a flow resistance to the liquid to thereby produce a damping action, in the vibration isolating device. The partition member is composed of two thick metal plates each provided in its thickness portion with a sloping depression. Such a depression is formed only by cutting or casting.

The vibration isolating device, generally called a rubber vibration isolator, is used, for instance, as an engine mount for automobile vehicles, whereby vibrations from an internal-combustion engine are absorbed so as not to be transmitted to a vehicle chassis.

As the vibration isolating device of this type, there has been proposed a vibration isolating device comprising two vibration-damping liquid chambers separated by a partition member provided with a restricted passage, in which vibrations from vibration source are absorbed by a flow resistance subjected to the liquid when the vibration is transmitted to the one chamber to thereby flow the liquid from the one chamber to the other through the restricted passage or the orifice.

In this connection, a large damping ·effect can be produced by prolonging the longitudinal size of the orifice. For this end, there have hitherto been adopted a method wherein a component provided at its outer surface with a spiral groove is inserted in an inner sleeve to form a spiral type long orifice (Japanese Patent Laid open No. 55—107,142).

Under the above circumstances, the invention is to provide an orifice structure or a partition member for use in the vibration isolating device which can simply be produced with the reduction of the cost.

According to the invention, as defined in claim 1, the partition member comprises a pair of abutting plate members, each made of thin metal sheet or synthetic resin sheet, least one of which members is provided with a depression formed by deformation or molding for defining said restricted passage. The invention will now be described with reference to the accompanying drawing, wherein:

Fig. 1 is a sectional view of a first embodiment of the vibration isolating device;

Fig. 2 is an exploded perspective view of the partition member shown in Fig. 1;

Fig. 3 is a sectional view of a second embodiment of the vibration isolating device;

Figs. 4 and 5 are top and bottom plan views of the partition member shown in Fig. 3, respectively;

Fig. 6 is a sectional view of a third embodiment of the vibration isolating device;

Fig. 7 is a sectional view of a fourth embodiment of the vibration isolating device;

Figs. 8 and 9 are exploded perspective view and top plan view of the partition member shown in Fig. 7, respectively;

Figs. 10 and 11 are sectional views taken along lines X-X and XI-XI of Fig. 9, respectively;

Fig. 12 is a sectional broken view of another embodiment of the partition member;

Fig. 13 is a sectional view of a fifth embodiment of the vibration isolating device;

Fig. 14 is an exploded perspective view of the partition member and movable member shown in Fig. 13; and

Figs. 15 and 16 are exploded sectional views of the other embodiments of the movable member.

Like parts are designated by like numerals throughout the different figures of the drawing.

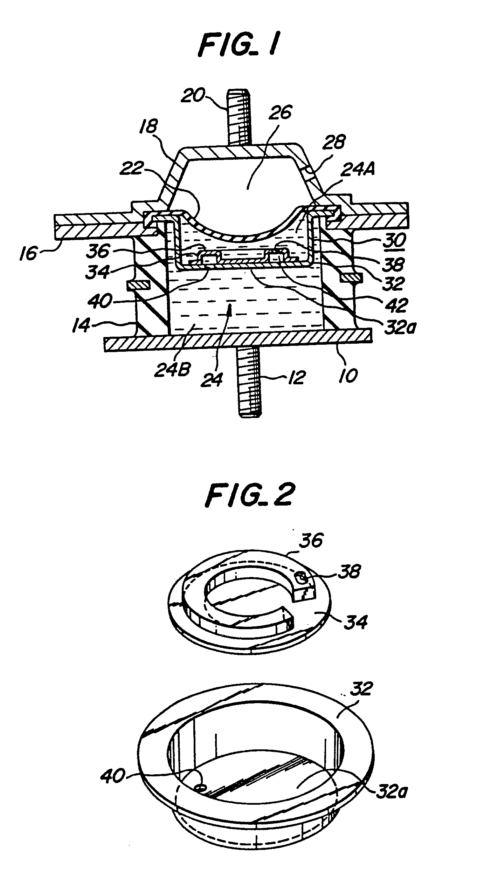

In Fig. 1 is sectionally shown a first embodiment of the vibration isolating device provided with the partition member.

This vibration isolating device is used as an engine mount for automobile vehicle and comprises a rigid bottom plate 10 provided at the central lower side with a fitting bolt 12, which is fixed to a vehicle chassis (not shown).

A rubber elastomer 14 of a hollow cyindrical form is bonded by vulcanisation at the lower end to the upper surface of the bottom plate 10. On the other hand, the rubber elastomer 14 is bonded by vulcanization at the top end to a lower surface of an annular disc-type joint plate 16, to the upper surface of which is fixed a rigid top plate 18. The top plate 18 is raised at its central portion and provided at the central upper side with a fitting bolt 20 for carrying and fixing an engine (not shown).

An elastic diaphragm 22 is clamped at its outer peripheral portion between the joint plate 16 and the top plate 18, and forms a liquid chamber 24 together with the bottom plate 10 and the rubber elastomer 14 on the one hand and an air chamber 26 together with the raised portion of the top plate 18 on the other hand. The air chamber 26 is communicated with an exterior through a hole 28 formed in the top plate 18. Therefore, the elastic diaphragm 22 may be subjected to elastic deformation in a direction of reducing the air chamber 26 by the pressure increase of the liquid chamber 24.

A partition member 30 is disposed in the liquid chamber 24. This partition member 30 is constituted by assembling a pair of plate members 32, 34 one upon the other, and divides the liquid chamber 24 into an upper liquid chamber 24A and a lower liquid chamber 24B.

As the plate material, use may be made of thin metal sheet, synthetic resin sheet and the like. For instance, the disc-type thin metal sheet is subjected to deep drawing, stamping or the like to form a desired depression for defining a restricted passage in the assembly of two sheets. Alternatively, the synthetic resin sheet having a desired depression may be manufactured by transfer molding, casting, injection molding or the like.

In the embodiment of Fig. 1, the partition member 30 is formed by assembling and fixing two plate members 32 and 34 as shown in Fig. 2. The plate member 32 is a hat-shaped body formed by drop drawing a disc metal sheet and is clamped and secured at the radially extending peripheral portion between the elastic diaphragm 22 and the rubber elastomer 14. To a recess bottom 32a of the plate member 32 is fixed the plate member 34 of a disc shape provided with a depression 36 corresponding to a C-shaped groove recess, which is formed by stamping or the like. Moreover, an opening 38 is formed in one end portion of the depression 36, through which the upper liquid chamber 24A is communicated with the inside of the depression 36. On the other hand, an opening 40 is formed in the recess bottom 32a at a position corresponding to the middle of the depression 36 or the other end portion of the depression 36 opposing to the opening 38, through which the lower liquid chamber 24B is communicated with the inside of the depression 36. Therefore, when the plate members 32 and 34 are assembled and fixed to form the partition member 30 as shown in Fig. 1, the inside of the depression 36 forms a restricted passage or orifice 42 communicating the upper liquid chamber 24A to the lower liquid chamber 24B through only the openings 38 and 40.

In the vibration isolating device having the structure shown in Fig. 1, vibrations generated by the working of the engine mounted on the top plate 18 are transmitted to the device through the top plate 18 and damped as follows. That is, since the rubber elastomer 14 acts as a main vibration-absorbing body, the vibration can be absorbed by the vibration-damping performance based on the internal friction of the rubber elastomer 14. Further, since the liquid flows between the upper and lower liquid chambers 24A and 24B through the orifice 42, the vibration-damping effect can be further enhanced by the viscosity resistance caused in the flowing of the liquid through the orifice 42.

Particularly, the orifice 42 is defined between the groove recess of the plate member 34 and the bottom recess of the plate member 32 when assembly these plate members one upon the other, while the plate members 32 and 34 are rendered into a desired shape by deep drawing or stamping of the disc sheet, so that the formation of the effective orifice 42 becomes very cheap. Moreover, the longitudinal size of the orifice 42 may easily be controlled by rotating the plate member 34 on the recess bottom 32a of the plate member 32 at a proper angle in the circumferential direction to adjust the distance between the openings 38 and 40.

Although the depression 36 is formed only in the plate member 34 in the embodiment of Fig. 1, such depression 36 may be formed in the recess bottom 32a of the plate member 32 to make the volume of the orifice 42 large. Moreover, the depression 36 is formed as the C-shaped groove in the illustrated embodiment, but it may take any form such as O-shaped form or the like without departing from the scope of the invention. That is, the depression 36 may be shaped into various forms satisfying the required volume of the orifice 42.

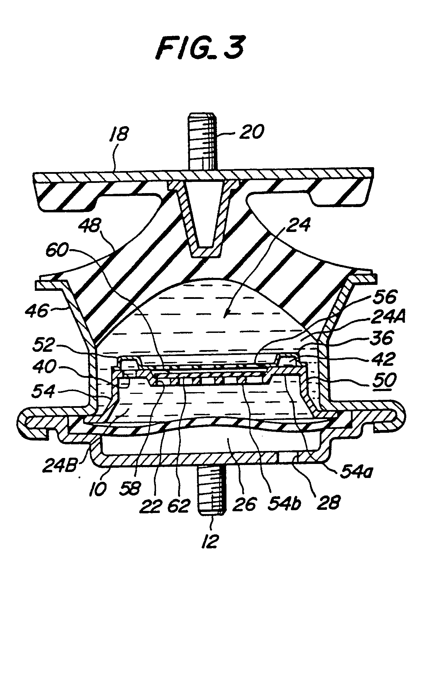

In Fig. 3 is sectionally shown a second embodiment of the vibration isolating device according to the invention, wherein a cylindrical shell 46 is fixed by caulking at one end to the outer periphery of the bottom plate 10, and a rubber elastic rubber 48 is bonded by vulcanization at the lower and outer periphery to the inner periphery of the upper part of the cylindrical shell 46. The rubber member 48 is also bonded by vulcanization at the top surface on the top plate 18. Further, the elastic diaphragm 22 is clamped at the outer periphery between the bottom plate 10 and the cylindrical shell 46, which forms the liquid chamber 24 together with the cylindrical shell 46 and the rubber member 48 on the one hand and the air chamber 26 together with the bottom plate 10 on the other hand.

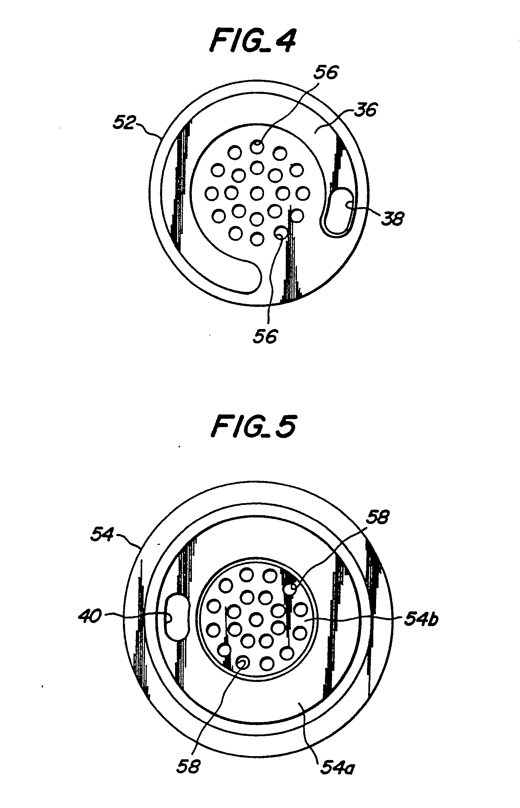

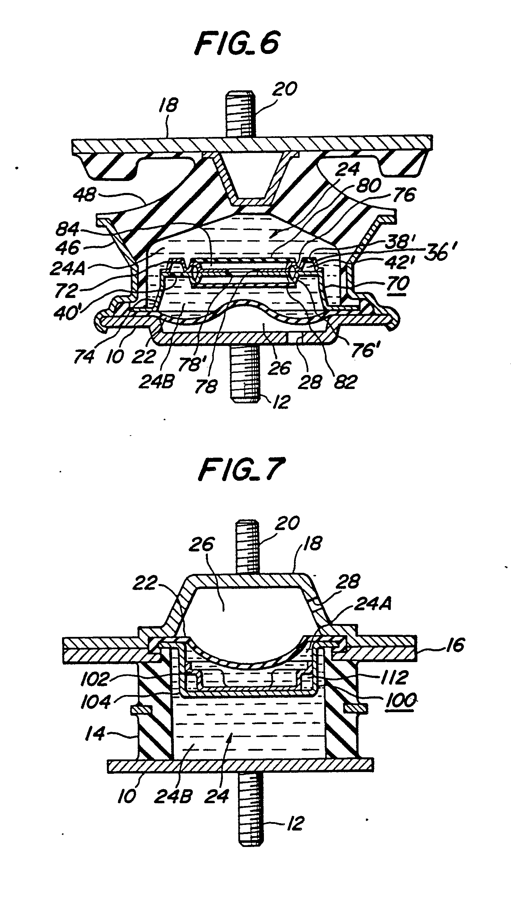

In the embodiment of Fig. 3, a partition member 50 is clamped between the cylindrical shell 46 and the diaphragm 22 to divide the liquid chamber 24 into the upper and lower liquid chambers 24A and 24B, and formed by the assembling of plate members 52 and 54 as shown in Figs. 4 and 5.

The plate member 52 is produced by stamping of the disc metal sheet and has substantially the same shape as the plate member 34, except that the central portion of the plate member 52 is provided with a plurality of small holes 56 in addition to the depression 36 and the opening 38. The plate member 54 is produced by deep drawing of the disc metal sheet and has substantially the same shape as the plate member 32, except that the central portion (54b) of the bottom recess 54a of the plate member 54 is further raised in an opposite direction and provided with a plurality of small holes 58.

As shown in Fig. 3, the radially extending peripheral portion of the plate member 54 is clamped between the cylindrical shell 46 and the diaphragm 22 so as to position the bottom recess 54a upwards, and the plate member 52 is assembled on and fixed to the top surface of the plate member 54. In this way, the restricted passage or orifice 42 is defined between the groove recess corresponding to the depression 36 of the plate member 52 and the plate member 54, and communicated with the upper and lower liquid chambers 24A and 24B through the openings 38 and 40. Further, a space 60 is formed between the central portions of the plate members 52 and 54 in the assembly thereof, and communicates with the upper and lower liquid chambers 24A and 24B through small holes 56 and 58. In the space 60 is placed a disc-like membrane (movable means) 62, which is made, for exmaple, of a rubbery elastomer. The thickness and diameter of the membrane 62 are made smaller than the size of the space 60 to enable the slight movement of the membrane 62 in the space 60.

In the vibration isolating device of Fig. 3, therefore, the vibration-damping effect can be improved by the viscosity resistance of the liquid passing through the orifice 42 likewise the case of Fig. 1. Further, since the membrane 62 is existent in the space 60, high frequency vibrations having a small amplitude can be absorbed by the slight movement of the membrane 62 in the space 60.

In Fig. 6 is sectionally shown a third embodiment of the vibration isolating device according to the invention having substantially the same structure as that of Fig. 3, except that a partition member 70 is used instead of the partition member 50. In this case, the partition member 70 is constituted by assembling of plate members 72 and 74. The plate member 72 is produced by stamping and punching the disc material sheet to form C-shaped depression 36' provided at one end portion with the opening 38', ring-like depression 76 adjacent to the depression 36' and central hole 78. The plate member 74 is produced by deep drawing and punching the disc metal sheet to form ring-like depression 76' and central hole 78' mating with the depression 76 and central hole 78 in the assembly of the plate members 72 and 74. After the plate member 72 is fixed to the top surface of the plate member 74, disc-like membranes 80, 82 are secured at their outer peripheries to the depressions 76, 76', respectively, whereby a space 84 is sealingly defined between the membranes 80 and 82 (movable means).

In the embdoiment of Fig. 6, therefore, not only vibrations are damped by the viscosity resistance of the liquid passing through the orifice 40', but also high frequency vibrations are damped by absorbing the change of volumes of the upper and lower liquid chambers 24A and 24B through the elastic deformation of the membranes 80 and 82 in a direction of reducing the space 84. That is, the partition member 70 shown in Fig. 6 develops the same damping effect as in the partition member 50 of Fig. 3.

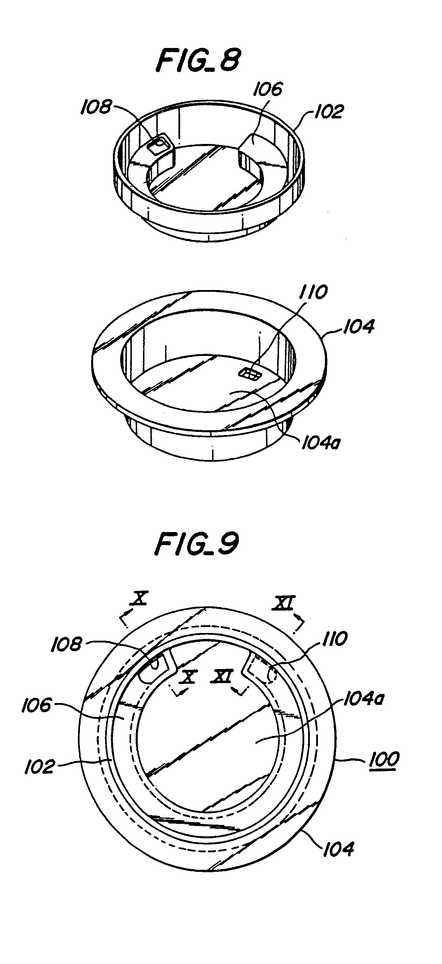

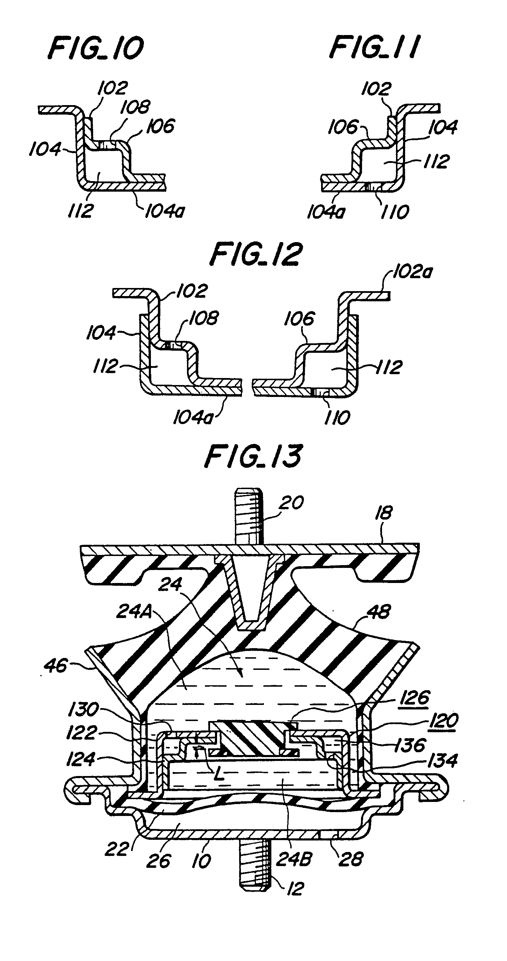

In Fig. 7 is sectionally shown a fourth embodiment of the vibration isolating device, which has substantially the same structure as that of Fig. 1 except that a partition member 100 is used instead of the partition member 30. The partition member 100 is constituted by assembling a pair of plate members 102 and 104 as shown in Figs. 8 to 11. The plate member 102 is provided at the outer peripheral portion with a depression 106 of L-shaped section by deep drawing of the disc metal sheet, which extends in a C-shaped form and is provided near one end thereof with an opening 108. The plate member 104 is a hat-shaped body formed by deep drawing of the disc metal sheet and is clamped at the radially extending peripheral portion between the elastic diaphragm 22 and the rubber elastomer 14. In a recess bottom 104a of the plate member 104 is formed an opening 110 at a position near the other end of the depression 106 opposing to the opening 108.

In the embodiment of Fig. 7, a restricted passage or an orifice 112 is formed between the depression 106 and the plate member 104 by assembling the plate member 102 on the recess bottom 104a of the plate member 104 and fixing them to each other. This orifice 112 is communicated with the upper liquid chamber 24A through the opening 108 on the one hand and with the lower liquid chamber 24B through the opening 110 on the other hand.

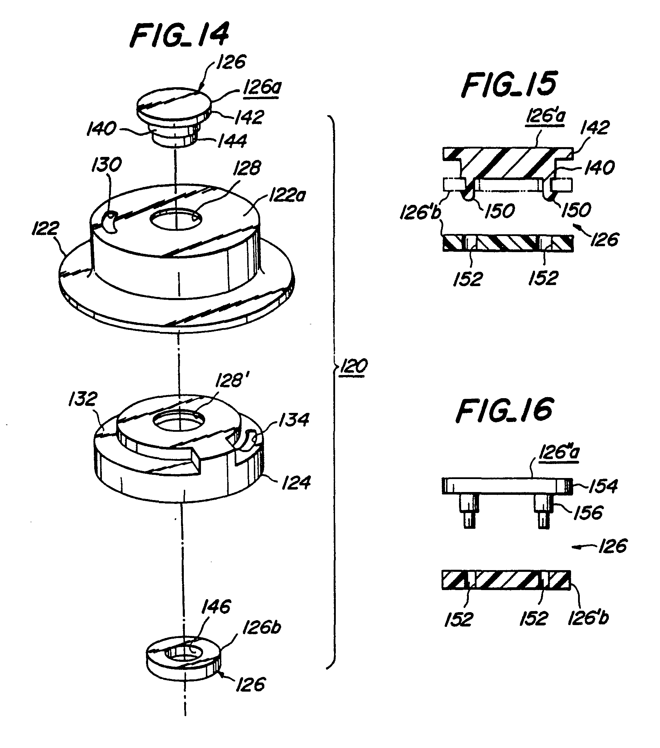

Fig. 12 shows a modified embodiment of the partition member 100. In this case, the outer peripheral portion 102a of the plate member 102 is radially extended over the outer periphery of the plate member 104 in the assembly of these plate members 102 and 104, and clamped between the elastic diaphragm 22 and the rubber elastomer 14 so as to divide the liquid chamber 24 into the upper and lower liquid chambers 24A and 24B.

In Fig. 13 is sectionally shown a fifth embodiment of the vibration isolating device according to the invention. This device is also used as an engine mount for automobile vehicle and comprises the rigid bottom plate 10 provided at the central lower side with the fitting bolt 12, which is fixed to a vehicle chassis (not shown).

The cylindrical shell 46 is fixed by caulking at one end to the outer periphery of the bottom plate 10, and further the elastic diaphragm 22 is clamped at the outer peripheral portion between the bottom plate 10 and the cylindrical shell 46. Thus, the air chamber 26 is defined between the bottom plate 10 and the elastic diaphragm 22, and communicated with an exterior through the hole 28 formed on the bottom plate 18. Therefore, the diaphragm 22 may be subjected to elastic deformation in a direction of expanding and reducing the air chamber 26.

The rubber elastic member 48 is bonded by vulcanisation at the lower and outer periphery as a main vibration-absorbing body to the inner periphery of the upper part of the cylindrical shell 46. Of course, the other elastic material may be used instead of rubber. Further, the rubber elastic member 48 is bonded by vulcanization at the top surface to the lower surface of the top plate 18 provided with the fitting bolt 20 for carrying and fixing an engine (not shown). In this way, the liquid chamber 26 is defined by the diaphragm 22, cylindrical shell 46 and rubber elastic member 48, and filled with an incompressible liquid such as water or the like.

In the vibration isolating device of Fig. 13, a partition member 120 as shown in Fig. 14 is arranged in the liquid chamber 24 so as to divide into the upper and lower liquid chambers 24A and 24B. This partition member 120 comprises a pair of plate members 122 and 124 and a movable disc body 126. The plate member 122 is a hat-shaped body formed by deep drawing of the disc metal sheet and is clamped at the radially extending peripheral portion between the cylindrical shell 46 and the disphragm 22. Further, the plate member 122 is provided at its central portion with a circular hole 128 for receiving the movable disc body 126 and near the outer periphery of its top portion 122a with an opening 130. On the other hand, the plate member 124 is provided at the outer peripheral portion with a depression 132 of L-shaped section by deep drawing of the disc metal sheet, which extends in a C-shaped form and is provided near one end thereof with an opening 134. Further, the plate member 124 is provided at the central portion with a circular hole 128' mating with the hole 128 in the lapping of these plate members 122 and 124. Therefore, when the plate member 122 is assembled on the plate member 124 and fixed thereto, a restricted passage or an orifice 136 is defined between the depression 132 and the plate member 122, which is communicated with the upper liquid chamber 24A through the opening 130 on the one hand and with the lower liquid chamber 24B through the opening 132 on the other hand.

The movable disc body (movable means) 126 is composed of an upper movable segment 126a and a lower movable segment 126b. The upper movable segment 126a is a cylindrical portion 140 having a diameter smaller than that of the hole 128, which is provided at the top with a flange portion 142 having a diameter larger than that of the hole 128 and at the bottom with a connection portion 144 having a diameter smaller than that of the cylindrical portion 140. The lower movable segment 126b has a diameter equal to that of the flange portion 142 and is provided at the central portion with a through-hole 146 fitting the connection portion 144. By fitting the connection portion 144 into the through-hole 146, the upper movable segment 126a is secured to the lower movable segment 126b to form an outer peripheral recess in the middle of the movable disc body 126. If necessary, the securing between both the segments can be ensured by applying an adhesive or the like to joint portion between the segments 126a and 126b.

The movable disc body 126 is preferably made of a synthetic resin having a bonding modulus of 1,000~10,000 kg/cm², whereby the occurrence of impact noise against the plate members 122 and 124 can be prevented when damping the high-frequency vibrations. Further, when the specific gravity of the movable disc body 126 is approximately equal to that of the liquid filled in the liquid chamber 24, the movement of the movable disc body 32 is easy. Preferably, a ratio of the outer diameter of the movable disc body 126 to the inner diameter of the liquid chamber 24 is not less than 70%.

As shown in Fig. 13, the movable disc body 126 is movably retained by the plate members 122 and 124 in such a manner that the flange portion 142 locates in the upper liquid chamber 24A and the lower movable segment 126b locates in the lower liquid chamber 24B. The length of the cylindrical portion 140 in the upper movable member 126a is longer than the total thickness of the plate members 122 and 124 (by a size of L in Fig. 13). On the other hand, the diameter of the circular holes 128, 128' is larger than that of the cylindrical portion 140 but smaller than that of the flange portion 142. Therefore, the movable disc body 126 can move through the holes 128, 128' in up and down direction by the size L. Moreover, the size L is preferably within a range of 0.1~1 mm.

When the vibration isolating device of Fig. 13 is actually applied to the automobile vehicle, the dead weight of the engine is born by the fitting bolt 20, so that the pressure inside the upper liquid chamber 24A rises and is transferred to the lower liquid chamber 24B through the orifice 136, whereby the volume of the air chamber 26 is reduced. In the operation of the engine, vibrations generated from the engine are transmitted to the device through the top plate 18. As a result, the vibration can be absorbed by the damping performance of the rubber elastic member 48 based on the internal friction thereof. If the frequency of the vibration is low and its amplitude is large, the liquid flows between the upper and lower liquid chambers 24A and 24B through the orifice 136, during which the damping effect is enhanced by the flow resistance subjected to the liquid. In the embodiment of Fig. 13, the orifice 136 is the C-shaped long restricted passage, so that the vibration-absorbing effect is large. Of course, the length of the orifice 136 may optionally be adjusted by changing the relative angle between the openings 130 and 134 in the assembling of the plate members 122 and 124.

When the vibrations of the engine has a high frequency of, for exmaple, more than 50 Hz and a small amplitude, there is a possibility that the orifice 136 becomes clogged. In this case, however, the movable disc body 126 can move by the size L in up and down direction, so that the change in the volume of the upper or lower liquid chamber 24A or 24B is produced by the slight movement of the body 126, whereby the pressure increase is suppressed to provide a low dynamic spring constant for absorbing the high-frequency and small-amplitude vibrations.

In the embodiment of Fig. 13, the outer peripheral recess is formed over a whole periphery of the movable disc body 126, but such a recess may be formed in a part of the periphery of the body 126.

In Figs. 15 and 16 are shown the other modified embodiments of the movable disc body 126. In the embodiment of Fig. 15, the upper movable segment 126'a has the same structure as the segment 126a except that plural engaging nibs 150 protrude downwards from the cyindrical portion 140 instead of the connection portion 144, while the lower movable segment 126'b has the same structure as the segment 126b except that plural small holes 152 capable of engaging with the engaging nibs 150 are formed instead of the throughhole 146. In the embodiment of Fig. 16, the upper movable segment 126''a of the movable disc body 126 is composed of a disc portion 154 and plural stepped pins 156 each protruding downward from the disc portion 154. Each small-diameter portion of the stepped pins 156 is inserted into the small hole 152 of the lower movable segment 126'b and fixed thereto by a suitable means. According to the invention, various structures of the movable disc body 126 may be adopted in addition to the illustrated embodiments.

As mentioned above, according to the invention, the partition member in the vibration isolating device is constituted by assembling a pair of plate members, at least one of which is provided with a depression, so that the restricted passage or orifice can easily be formed in a simple structure. Further, the production cost for the formation of the orifice can be reduced.

## Claims

1. A vibration isolating device comprising two vibration-damping liquid chambers (24A, 24B), and a partition member (50; 70; 120) interposed between said two liquid chambers (24A, 24B) and provided with a restricted passage (42; 42'; 136) communicating with said liquid chambers) and comprising a movable means (62; 80, 82; 126) arranged in a part thereof said partition member (50; 70; 120) comprising a pair of abutting plate members (52, 54; 72, 74; 122, 124), characterized in that each of said plate members is made of thin metal sheet or synthetic resin sheet, at least one of these plate members is provided with a depression (36; 36'; 132) formed by deformation or molding for defining said restricted passage (42; 42'; 136), and that each of the plate members is provided with an opening (38, 40, 38', 40', 130, 134) communicating to said restricted passage (42; 42', 136).

2. A vibration isolating device according to claim 1 characterized in that one plate member (52) is provided near the outer peripheral portion with said depression (36) and at the central portion with plural small holes (56), and the other plate member (54) is raised at the central portion provided there with plural small holes (58), and as the movable means a disc-like membrane (62) is placed in a space defined between the central portions of said plate members (52, 54) (Fig. 3).

3. A vibration isolating device according to claim 1 characterized in that one plate member (72) is provided at the outer peripheral portion with said depression (36') and a ring-like depression (76) adjoining inward to said depression (36') and at the central portion with a central hole (78), and the other plate member (74) is provided with a ring-like depression (76') and a central hole (78') aligned with said ring-like depression (76) and central hole (78) in the one plate member (72), and as the movable means a disc-like membrane (80, 82) is secured at the outer periphery to each of said ring-like depressions (76, 76') (Fig. 6).

4. A vibration isolating device according to claim 1 characterized in that one plate member (124) is provided near the outer peripheral portion with said depression (132) and at the central portion with a circular hole (128), and the other plate member (122) is deformed in the region of said depression (132) forming said restricted passage and is provided at the central portion with a circular hole (128'), and as the movable means a movable disc body (126) is movably retained in the central holes (128, 128') by the abutting plate members (122, 124) (Fig. 13).

5. A vibration isolation system comprising a vibration source mounted on a mounting member characterized in that at least one device according to any one of claims 1 to 4 is interposed between said source and said mounting member.

6. A system according to claim 5 characterized in that said source is an internal combustion engine and said mounting member is a vehicle chassis.

## Patentansprüche

1. Vorrichtung zur Schwingungsisolierung mit zwei Schwingungsdämpfungs-Flüssigkeitskammern (24A, 24B) und einem Trennglied (50; 70; 120), das zwischen den beiden Flüssigkeitskammern (24A, 24B) angeordnet und mit einer verengten Passage (42; 42'; 136) versehen ist, die mit den beiden Flüssigkeitskammern in Verbindung steht und bewegliche Mittel (62; 80, 82; 126) aufweist, die in einem Teil desselben angeordnet sind, wobei außerdem das Trennglied (50; 70; 120) ein Paar von aneinanderliegenden, plattenförmigen Gliedern (52, 54; 72, 74; 122, 124) aufweist, dadurch gekennzeichnet, daß jedes plattenförmige Glied aus einem dünnen Metallblech oder einem dünnen, aus Kunststoff bestehenden Flächenmaterial hergestellt ist, daß zumindest eines dieser plattenförmigen Glieder mit einer Vertiefung (36; 36'; 132) versehen ist, die durch eine Verformung oder durch Gießen hergestellt ist, um die verengte Passage (42; 42'; 136) zu bilden und daß jedes der plattenförmigen Glieder mit einer Öffnung (38, 40; 38', 40'; 130, 134) versehen ist, die mit der verengten Passage (42; 42'; 136) in Verbindung steht.

2. Vorrichtung zur Schwingungsisolierung gemäß Anspruch 1, dadurch gekennzeichnet, daß eines (52) der plattenförmigen Glieder in der Nähe des äußeren Umfangsabschnittes mit der Vertiefung (36) und im Mittelabschnitt mit einer Vielzahl von kleinen Löchern (56) versehen ist, und daß das andere (54) der plattenförmigen Glieder im Mittelabschnitt angehoben ausgebildet und dort mit einer Vielzahl von kleinen Löchern (58) versehen ist und daß als bewegliches Mittel eine scheibenartige Membran (62) in einem Raum angeordnet ist, der zwischen den Mittelabschnitten der plattenförmigen Glieder (52, 54) ausgebildet ist (Fig. 3).

3. Vorrichtung zur Schwingungsisolierung gemäß Anspruch 1, dadurch gekennzeichnet, daß eines (72) der plattenförmigen Glieder an seinen äußerem Umfangsabschnitt mit der Vertiefung (36') und einer innerhalb der Vertiefung (36') liegenden, benachbarten ringartigen Vertiefung (76) und im Mittelabschnitt mit einem mittigen Loch (78) versehen ist und daß das andere (74) der plattenförmigen Glieder mit einer ringartigen Vertiefung (76') und einem mittigen Loch (78') versehen ist, die mit der ringartigen Vertiefung (76) bzw. mit dem mittigen Loch (78) des einen (72) der plattenförmigen Glieder ausgerichtet ist, und daß als bewegliches Mittel eine scheibenartige Membran (80, 82) an Außenumfang jeder der ringartigen Vertiefungen (76, 76') befestigt ist (Fig. 6).

4. Vorrichtung zur Schwingungsisolierung gemäß Anspruch 1, dadurch gekennzeichnet, daß das eine (124) der plattenförmigen Glieder in der Nähe des äußeren Umfangsabschnittes mit der Vertiefung (132) und im Mittelabschnitt mit einem kreisförmigen Loch (128) versehen ist, und daß das andere (122) der plattenförmigen Glieder im Bereich der die verengte Passage bildenden Vertiefung (132) verformt und im Mittelabschnitt mit einem kreisförmigen Loch (128') versehen ist, und daß als bewegliches Mittel ein beweglicher Scheibenkörper (126) durch die aneinanderliegenden plattenförmigen Glieder (122, 124) in den mittigen Löchern (128, 128') beweglich gehalten ist (Fig. 13).

5. System zur Schwingungsisolierung mit einem an einem Befestigungsteil angebrachten Schwingungserreger, dadurch gekennzeichnet, daß zumindest eine Vorrichtung gemäß einem der Ansprüche 1 bis 4 zwischen dem Erreger und dem Befestigungsteil angeordnet ist.

6. System nach Anspruch 5, dadurch gekennzeichnet, daß der Erreger eine Brennkraftmaschine und das Befestigungsteil ein Fahrzeugchassis ist.

## Revendications

1. Dispositif isolateur des vibrations comprenant deux chambres d'amortissement des vibrations à liquide (24A, 24B), et un élément de cloison (50; 70; 120) intercalé entre lesdites deux chambres à liquide (24A, 24B) comportant un passage limité (42; 42'; 136) en communication avec lesdites chambres à liquide et dans une partie duquel est agencé un moyen mobile (62; 80, 82; 126) ledit élément de cloison (50; 70; 120) étant constitué d'une paire d'éléments de plaque de butée (54; 72; 74; 122, 124), caractérisé par le fait que chacun desdits éléments de plaque est fabriqué en une tôle métallique mince ou en une feuille de résine synthétique, un au moins de ces éléments de plaque présente un évidement (36; 36'; 132) formé par déformation ou moulage pour définir ledit passage limité (42; 42'; 136), et par le fait que chacun des éléments de plaque présente une ouverture (38, 40; 38', 40'; 130, 134) communiquant avec ledit passage limité (42; 42'; 136).

2. Dispositif isolateur des vibrations selon la revendication 1, caractérisé par le fait que l'un des éléments de plaque (52) présente à proximité de sa partie périphérique extérieure ledit évidement (36) et dans sa partie centrale plusieurs petits orifices (56) et par la fait que l'autre élément de plaque (54) est soulevé dans la partie centrale présentant ces petits orifices multiples (58), et par le fait qu'une membrane (62) en forme de disque servant du moyen mobile est disposées dans un espace délimité entre les parties centrales desdits éléments de plaque (52, 54) (figure 3).

3. Dispositif isolateur des vibrations selon la revendication 1, caractérisé par le fait que l'un des éléments de plaque (72) présente dans sa partie périphérique extérieure ledit évidement (36') et un évidement en forme d'anneau (76) rejoignant ledit évidement (36') vers l'intérieur et dans la partie centrale un orifice central (78), et l'autre élément de plaque (74) présente un évidement (76') en forme d'anneau et un orifice central (78') aligné avec ledit évidement (76) en forme d'anneau et avec l'orifice central (78) de l'autre élément de plaque (72), et par le fait qu'une membrane en forme de disque constituant un moyen mobile (80, 82) est fixée sur la périphérie extérieure de chaque évidement (76, 76') en forme d'anneau (figure 6).

4. Dispositif isolateur des vibrations selon al revendication 1, caractérisé par le fait que l'un des éléments de plaque (124) présente à proximité de sa partie périphérique extérieure ledit évidement (132) et dans sa partie centrale, un orifice circulaire (128), et par le fait que l'autre élément de plaque (122) est déformé dans la région dudit évidement (132) en constituant ledit passage limité et à sa partie centrale un orifice circulaire (128') et par le fait qu'une pièce mobile en forme de disque (126) constituant le moyen mobile est maintenue en mouvement dans les orifices centraux (128, 128') par les éléments de plaque de butée (122, 124) (figure 13).

5. Dispositif isolateur des vibrations comprenant une source de vibration montée sur un élément de montage caractérisé par le fait qu'au moins un dispositif selon l'une quelconque des revendications 1 à 4 est intercalé entre ladite source et ledit élément de montage.

6. Système selon la revendication 5, caractérisé par le fait que ladite source est un moteur à combustion interne et par le fait que ledit élément de montage est un châssis de véhicule.

## FIG. 1

## FIG. 2

1

## FIG. 3

## FIG_4

## FIG_5

## FIG_6

## FIG_7

## FIG_8

## FIG_9

FIG.10

FIG.11

FIG.12

FIG.13

## FIG_14

126
126a
142
140
144
130
128
122a
122

128'
132
134
124

146
126b
126

120

## FIG_15

126'a
142
140
126'b
150
150
126
152
152

## FIG_16

126"a
154
156
126
152
152
126'b